# EUROPEAN PATENT APPLICATION

(11) **EP 4 210 192 A1**
(43) Date of publication of application: **12.07.2023**
(21) Application number: 20957070.4
(22) Date of filing: 14.10.2020
(51) Int. Cl.: H02J 7/00, B60R 16/033

(54) **LOW-VOLTAGE REDUNDANT POWER SUPPLY SYSTEM**

(71) Applicant: Huawei Technologies Co., Ltd., Shenzhen, Guangdong 518129 (CN)
(72) Inventor: WANG, Hui, Shenzhen, Guangdong 518129 (CN); YANG, Lulu, Shenzhen, Guangdong 518129 (CN); SUN, Jian, Shenzhen, Guangdong 518129 (CN); SONG, Tianzhu, Shenzhen, Guangdong 518129 (CN)
(74) Representative: Huawei European IPR
(86) International application number: PCT/CN2020/120961
(87) International publication number: WO 2022/077289

(57) **Abstract**

Embodiments of this application propose a low-voltage redundant power supply system, including: a high-voltage battery pack, configured to provide a first voltage and including a number of power supply units sequentially connected in series, each of the power supply units being at least one battery in the high-voltage battery pack or an equivalent power supply formed by connecting a number of batteries in series/parallel; and a relay array, with relays in the relay array connected to the power supply units in the high-voltage battery pack based on a specified connection relationship, where in at least one on/off state combination of the relay array, at least one power supply unit in the high-voltage battery pack is reused in a time-division manner to provide a second voltage to supply power to a low-voltage load; and the first voltage is higher than the second voltage. The system can resolve the problems of a conventional low-voltage power supply solution failing to implement active balancing for batteries and a redundant power supply function for a low-voltage load, thereby improving power supply reliability, and avoiding power derating of a high-voltage power system caused by an SoC imbalance of batteries.

## Description

### TECHNICAL FIELD

This application relates to the field of electric vehicle technologies, and in particular, to a low-voltage redundant power supply system.

### BACKGROUND

Most of the low-voltage power supply systems of current electric vehicles have inherited a power supply solution of conventional fuel vehicles, that is, an independent 12 V lead-acid battery is configured to supply electrical energy to a controller and other low-voltage devices. The independent 12 V battery occupies large space and reduces energy density of the power supply system. Moreover, the use of a single power supply cannot ensure power supply reliability, and failure to normally start a vehicle is easily caused when the vehicle is stationary for a long time.

In some conventional technologies, although a redundant power supply system or a smart power replenishment system using two low-voltage batteries improves reliability of power supply for a low-voltage load, the problem regarding space occupied by the low-voltage batteries still exists. In view of this problem, existing technologies propose to use some batteries in a traction battery pack to supply power to a low-voltage load, thereby omitting the 12 V batteries and saving space. However, these technologies essentially "hide" low-voltage power supply batteries in the traction battery pack, and do not actually omit the low-voltage batteries. Without an active balancing function, when an SoC of a battery for low-voltage power supply is too low, an external energy output capability of the entire high-voltage battery pack is severely affected, causing the vehicle to travel at limited power and a limited speed. These technologies cannot implement redundant power supply, the power supply reliability cannot be ensured, and failure to normally start a vehicle is easily caused when the vehicle is stationary for a long time.

### SUMMARY

In view of this, embodiments of this application provide a low-voltage redundant power supply system, to resolve the problems of large space occupied by a low-voltage battery, lack of an active balancing function, and failure to implement redundant power supply to a low-voltage load.

A low-voltage redundant power supply system provided in this application includes: a high-voltage battery pack, configured to provide a first voltage and including a number of power supply units sequentially connected in series, each of the power supply units being at least one battery in the high-voltage battery pack or an equivalent power supply formed by connecting a number of batteries in series/parallel; and a relay array, with relays in the relay array connected to the power supply units in the high-voltage battery pack based on a specified connection relationship, where in at least one on/off state combination of the relay array, at least one power supply unit in the high-voltage battery pack is reused in a time-division manner to provide a second voltage to supply power to a low-voltage load; and the first voltage is higher than the second voltage.

Such a power supply manner can isolate a battery with redundant power from the high-voltage battery pack to supply power to the low-voltage load LVLoads, and can also prevent an exception of the power supply system for the high-voltage load caused by an exception of the battery.

In an implementation, the number of power supply units include a first power supply unit and at least one second power supply unit, and in an on/off state combination of the relay array, the first power supply unit or the second power supply unit provides the second voltage to supply power to the low-voltage load.

Any single battery in the high-voltage battery pack or any equivalent power supply formed by a plurality of batteries supplying power to the low-voltage load as a power supply unit in different on/off state combinations of different relay arrays falls within the protection scope of embodiments of this application.

In an implementation, the number of power supply units include a first power supply unit and a second power supply unit, and in an on/off state combination of the relay array, the first power supply unit and at least one second power supply unit are connected in series to provide the second voltage to supply power to the low-voltage load.

The first power supply unit and the at least one second power supply unit are connected in series and are isolated from the high-voltage power supply system, and electrical energy for the low-voltage load LVLoads is completely supplied by the first power supply unit and the at least one second power supply unit. The first power supply unit and the at least one second power supply unit are connected in series to supply power to the outside, such that a relatively high second voltage can be provided for the low-voltage load LVLoads.

In an implementation, the number of power supply units include a first power supply unit and a second power supply unit, and in an on/off state combination of the relay array, the first power supply unit and the second power supply unit are connected in parallel to provide the second voltage to supply power to the low-voltage load.

The first power supply unit and the second power supply unit are connected in parallel and are isolated from the high-voltage power supply system, and electrical energy for the low-voltage load LVLoads is completely supplied by the first power supply unit and the second power supply unit. The first power supply unit and the second power supply unit are connected in parallel to supply power to the outside, such that a relatively high supply current can be provided for the low-voltage load LVLoads, and a state-of-charge imbalance caused when the first power supply unit and the second power supply unit supply power to the outside for a long time can also be alleviated.

In an implementation, the system further includes a direct current chopper, and the number of power supply units include a first power supply unit and a third power supply unit; the first power supply unit supplies power to the low-voltage load; and in an on/off state combination of the relay array, the first power supply unit interrupts power supply to the low-voltage load, the third power supply unit supplies power to the direct current chopper, and the direct current chopper provides the second voltage to supply power to the low-voltage load.

The direct current chopper DC/DC is used to supply power to the low-voltage load, so that power derating of a high-voltage power system caused by a state-of-charge (SoC) imbalance of batteries that supplies power to the low-voltage load for a long time can be avoided.

In an implementation, the system further includes a direct current chopper, and the number of power supply units include a first power supply unit and a third power supply unit; the first power supply unit supplies power to the low-voltage load; and in an on/off state combination of the relay array, the third power supply unit supplies power to the direct current chopper, and the direct current chopper provides the second voltage to perform balancing for the first power supply unit and to supply power to the low-voltage load.

Performing balancing for the power supply unit in the high-voltage battery pack using the direct current chopper DC/DC can avoid a decline in a capability of power supply to the low-voltage load due to insufficient battery power, and can also avoid power derating of a high-voltage power system due to an SoC imbalance of the power supply unit or another battery that supplies power to the low-voltage load.

In an implementation, the system further includes a direct current chopper, and the number of power supply units further include a third power supply unit; and in an on/off state combination of the relay array, the third power supply unit supplies power to the direct current chopper, and the direct current chopper provides the second voltage to perform balancing for the first power supply unit or the second power supply unit and to supply power to the low-voltage load.

The direct current chopper DC/DC performs active balancing for the first power supply unit or the second power supply unit while supplying electrical energy to the low-voltage load LVLoads, so that an SoC imbalance caused when the first power supply unit or the second power supply unit supplies power to the outside for a long time can be eliminated.

In an implementation, the system further includes a direct current chopper, and the number of power supply units further include a third power supply unit; and in an on/off state combination of the relay array, the third power supply unit supplies power to the direct current chopper, and the direct current chopper provides the second voltage to perform balancing for the first power supply unit and the second power supply unit and to supply power to the low-voltage load.

In this power supply mode, the first battery and the second battery are connected in parallel and are isolated from the high-voltage load, and the direct current chopper DC/DC performs balancing for the first battery and the second battery connected in parallel while supplying power to the low-voltage load LVLoads, so that an SoC imbalance caused when the first battery and the second battery supply power to the outside for a long time can be eliminated.

In an implementation, the number of power supply units include a first power supply unit, a second power supply unit, and a third power supply unit; the relay array includes a first relay HVS_1, a second relay HVS_2, a third relay LVS_1, and a fourth relay LVS_2; and the specified connection relationship includes: the first relay HVS_1 is connected between the first power supply unit and the second power supply unit; the second relay HVS_2 is connected between the second power supply unit and the third power supply unit; a first pole of the second power supply unit is connected to a first terminal of the low-voltage load via the third relay LVS_1; and a second pole of the second power supply unit is connected to a second terminal of the low-voltage load via the fourth relay LVS_2.

This connection mode enables isolation of the first power supply unit and the second power supply unit from the high-voltage battery pack, such that the second power supply unit can separately provide the second voltage to supply power to the low-voltage load.

In an implementation, the number of power supply units include a first power supply unit, a second power supply unit, and a third power supply unit; the relay array includes a first relay HVS_1, a second relay HVS_2, a third relay LVS_1, a fourth relay LVS_2, a fifth relay LVS_3, and a sixth relay LVS_4; and the specified connection relationship includes: the first relay HVS_1 is connected between the first power supply unit and the second power supply unit; the second relay HVS_2 is connected between the second power supply unit and the third power supply unit; a first pole of the second power supply unit is connected to a first terminal of the low-voltage load via the third relay LVS_1 ; a second pole of the second power supply unit is connected to a second terminal of the low-voltage load via the fourth relay LVS_2; a first pole of the first power supply unit is connected to the first terminal of the low-voltage load via the fifth relay LVS_3; and a second pole of the first power supply unit is connected to the second terminal of the low-voltage load via the sixth relay LVS_4.

This connection mode enables isolation of the first power supply unit and the second power supply unit from the high-voltage battery pack, such that the first power supply unit or the second power supply unit can separately provide the second voltage to supply power to the low-voltage load.

In an implementation, the number of power supply units include a first power supply unit, a second power supply unit, and a third power supply unit; the relay array includes a first relay HVS_1, a second relay HVS_2, a third relay LVS_1, a fourth relay LVS_2, a fifth relay LVS_3, and a sixth relay LVS_4; and the specified connection relationship includes: the first relay HVS_1 is connected between the first power supply unit and the second power supply unit; the second relay HVS_2 is connected between the second power supply unit and the third power supply unit; a first pole of the second power supply unit is connected to a first terminal of the low-voltage load via the third relay LVS_1; a second pole of the second power supply unit is connected to a second pole of the first power supply unit via the fourth relay LVS_2; a first pole of the first power supply unit is connected to the first terminal of the low-voltage load via the fifth relay LVS_3; and a second pole of the first power supply unit is connected to the second terminal of the low-voltage load via the sixth relay LVS_4.

This connection mode enables isolation of the first power supply unit and the second power supply unit from the high-voltage battery pack, such that the first power supply unit and the second power supply unit can provide the second voltage separately or in combination to supply power to the low-voltage load.

In an implementation, the system further includes a direct current chopper; the relay array further includes a seventh relay HVS_3 and an eighth relay HVS_Pos; and the specified connection relationship further includes: the eighth relay HVS_Pos is connected between a first pole of the third power supply unit and a first pole on an input side of the direct current chopper; the seventh relay HVS_3 is connected between a second pole of the third power supply unit and a second pole on the input side of the direct current chopper; the second relay HVS_2 is connected between the second pole on the input side of the direct current chopper and the first pole of the second power supply unit; the seventh relay HVS_3 is connected to the second relay HVS_2 in series and is then connected to the first pole of the second power supply unit; and the low-voltage load is connected between a first pole and a second pole on an output side of the direct current chopper.

This connection mode enables isolation of the first power supply unit and the second power supply unit from the high-voltage battery pack, such that the direct current chopper can provide the second voltage to supply power to the low-voltage load, and perform active balancing for the first power supply unit and the second power supply unit.

In an implementation, the second relay HVS_2 is a linkage relay; the second relay HVS_2 includes a first linkage unit HVS_2' and a second linkage unit HVS_2"; and the second relay HVS_2 is connected to the second pole of the first power supply unit via the second linkage unit HVS_2" and the first linkage unit HVS_2'.

The second relay HVS_2 is always in an off state while in operation, isolating the third power supply unit supplying power to the direct current chopper DC/DC from the first power supply unit and/or the second power supply unit supplying power to the low-voltage load. The second relay HVS_2 can also isolate an input and an output of the direct current chopper DC/DC. The second relay (HVS_2) ensures that positive and negative poles of the low-voltage power supply system are always isolated from positive and negative poles of the high-voltage power supply system.

According to the low-voltage redundant power supply system provided in embodiments of this application, the relay array is added to the battery pack, to reuse a battery in the high-voltage battery pack in a time-division manner to supply power to the low-voltage load, thereby omitting a low-voltage battery in a conventional power supply solution. Controlling the relays in combination can provide a plurality of low-voltage power supply modes, such as independent single-battery power supply, parallel dual-battery power supply, and series dual-battery power supply, thereby making the low-voltage power supply system more reliable. Controlling the relays in combination can enable single-battery active balancing, dual-battery active balancing, or the like for batteries for supplying power to the low-voltage load, to avoid an excessively large difference between this part of batteries and other batteries caused when this part of batteries supply power to the low-voltage load for a long time.

Controlling the relays in combination and reusing a battery module in the high-voltage battery pack in a time-division manner to supply power to the low-voltage load resolve the problem of large space occupied by a low-voltage battery arranged in a conventional low-voltage power supply solution. In addition, the low-voltage redundant power supply system provided in embodiments of this application can resolve the problems of a conventional low-voltage power supply solution failing to implement active balancing for batteries and a redundant power supply function for a low-voltage load, thereby not only improving power supply reliability, and but also avoiding power derating of a high-voltage power system caused by an SoC imbalance of batteries.

### BRIEF DESCRIPTION OF DRAWINGS

FIG. 1 is a schematic diagram of an electric vehicle power supply system according to Solution 1;
FIG. 2 is a schematic diagram of a new energy vehicle power supply system omitting a low-voltage battery according to Solution 2;
FIG. 3a is a principle diagram in which one power supply unit supplies power to a low-voltage load in a low-voltage redundant power supply system according to an embodiment of this application;
FIG. 3b is a schematic diagram of an on/off state combination of a relay array when one power supply unit supplies power to a low-voltage load while a high-voltage battery pack supplies power to a high-voltage load in the low-voltage redundant power supply system shown based on FIG. 3a;
FIG. 3c is a schematic diagram of an on/off state combination of a relay array when one power supply unit supplies power to a low-voltage load in the low-voltage redundant power supply system shown based on FIG. 3a;
FIG. 3d is an equivalent circuit diagram in which a battery B₂ shown in FIG. 3c separately supplies power to a low-voltage load as a power supply unit;
FIG. 4a is a principle diagram in which two power supply units separately supply power to a low-voltage load in a low-voltage redundant power supply system according to an embodiment of this application;
FIG. 4b is a schematic diagram of an on/off state combination when a high-voltage battery pack supplies power to a high-voltage load and two power supply units may separately supply power to a low-voltage load in the low-voltage redundant power supply system shown based on FIG. 4a;
FIG. 4c is a schematic diagram of an on/off state combination of a relay array when in a high-voltage power-off state, a battery B₂ is reused in a time-division manner to supply power to a low-voltage load in the low-voltage redundant power supply system shown based on FIG. 4a;
FIG. 4d is a schematic diagram of an on/off state combination of a relay array when in a high-voltage power-off state, a battery B₁ is reused in a time-division manner to supply power to a low-voltage load in the low-voltage redundant power supply system shown based on FIG. 4a;
FIG. 5a is a principle diagram in which two power supply units supply power to a low-voltage load in combination in a low-voltage redundant power supply system according to an embodiment of this application;
FIG. 5b is a schematic diagram of an on/off state combination of a relay array when a high-voltage battery pack supplies power to a high-voltage load in the low-voltage redundant power supply system shown based on FIG. 5a;
FIG. 5c is a schematic diagram of an on/off state combination of a relay array when a battery B₁ is reused in a time-division manner to supply power to a low-voltage load in the low-voltage redundant power supply system shown based on FIG. 5a;
FIG. 5d is a schematic diagram of an on/off state combination of a relay array when a battery B₂ is reused in a time-division manner to supply power to a low-voltage load in the low-voltage redundant power supply system shown based on FIG. 5a;
FIG. 5e is a schematic diagram of an on/off state combination of a relay array when a battery B₁ and a battery B₂ are reused in a time-division manner to be connected in series to supply power to a low-voltage load in the low-voltage redundant power supply system shown based on FIG. 5a;
FIG. 5f is a schematic diagram of an on/off state combination of a relay array when a battery B₁ and a battery B₂ are reused in a time-division manner to be connected in parallel to supply power to a low-voltage load in the low-voltage redundant power supply system shown based on FIG. 5a;
FIG. 6a is a principle diagram in which a direct current chopper DC/DC is used to supply power to a low-voltage load in a low-voltage redundant power supply system according to an embodiment of this application;
FIG. 6b is a schematic diagram of an on/off state combination of a relay array when a direct current chopper DC/DC is in a non-operating state and a battery B₁ is reused in a time-division manner to supply power to a low-voltage load in the low-voltage redundant power supply system shown based on FIG. 6a;
FIG. 6c is a schematic diagram of an on/off state combination of a relay array when a direct current chopper DC/DC supplies power to a low-voltage load LVLoads in the low-voltage redundant power supply system shown based on FIG. 6a;
FIG. 6d is a schematic diagram of an on/off state combination of a relay array when a high-voltage battery pack supplies power to a direct current chopper DC/DC in the low-voltage redundant power supply system shown based on FIG. 6a;
FIG. 6e is a schematic diagram of an on/off state combination of a relay array when a direct current chopper DC/DC performs balancing for a battery B₂ in the low-voltage redundant power supply system shown based on FIG. 6a;
FIG. 7a is a schematic principle diagram of a circuit in which a direct current chopper DC/DC performs balancing for two batteries that supply power to a low-voltage load in a low-voltage redundant power supply system according to an embodiment of this application;
FIG. 7b is a schematic diagram of an on/off state combination of a relay array when a direct current chopper DC/DC supplies power and performs active balancing for a battery B₂ in the low-voltage redundant power supply system shown based on FIG. 7a;
FIG. 7c is a schematic diagram of an on/off state combination of a relay array when a direct current chopper DC/DC supplies power and performs active balancing for a battery B₁ in the low-voltage redundant power supply system shown based on FIG. 7a;
FIG. 7d is a schematic diagram of an on/off state combination of a relay array when a direct current chopper DC/DC supplies power and performs balancing for a battery B₁ and a battery B₂ connected in parallel in the low-voltage redundant power supply system shown based on FIG. 7a;
FIG. 7e is a schematic diagram of an on/off state combination of a relay array when a direct current chopper DC/DC supplies power without balancing in the low-voltage redundant power supply system shown based on FIG. 7a; and
FIG. 7f is a schematic diagram of an on/off state combination of a relay array when a direct current chopper DC/DC is in a non-operating state and a power supply unit in a high-voltage traction battery pack that is reused in a time-division manner supplies power to a low-voltage load in the low-voltage redundant power supply system shown based on FIG. 7a.

### DETAILED DESCRIPTION OF EMBODIMENTS

"Some embodiments" in the following description describe a subset of all possible embodiments, but it may be understood that the "some embodiments" may be the same subset or different subsets of all the possible embodiments, and may be combined with each other without conflict.

The terms such as "first/second/third", or a module A, a module B, and a module C in the following description are only intended to distinguish between similar objects and do not indicate specific ordering of objects. It may be understood that specific orders or sequences are interchangeable when it permits, so that embodiments of this application described herein can be implemented in an order other than that illustrated or described herein.

Reference numerals of steps, such as S110 and S120, in the following descriptions do not necessarily indicate that the steps are performed in this order. When it permits, positions of the steps may be interchanged, or the steps are performed simultaneously.

Unless otherwise defined, all technical and scientific terms used herein have the same meanings as those usually understood by a person skilled in the art of this application. The terms used herein are only for the purpose of describing embodiments of this application, and are not intended to limit this application.

The following describes the technical solutions in this application with reference to the accompanying drawings.

Before the further detailed description of embodiments of this application, some existing technical solutions are described.

Solution 1 provides an existing electric vehicle power supply system. The system has a low-power 12 V direct current power supply 22 built in a traction battery pack 20, which directly converts a high-voltage current of the traction battery pack 20 into a 12 V low-voltage direct current, providing a low-voltage power supply for a controller in place of a 12 V battery. An output terminal of a direct current chopper DC/DC is connected to other low-voltage loads.

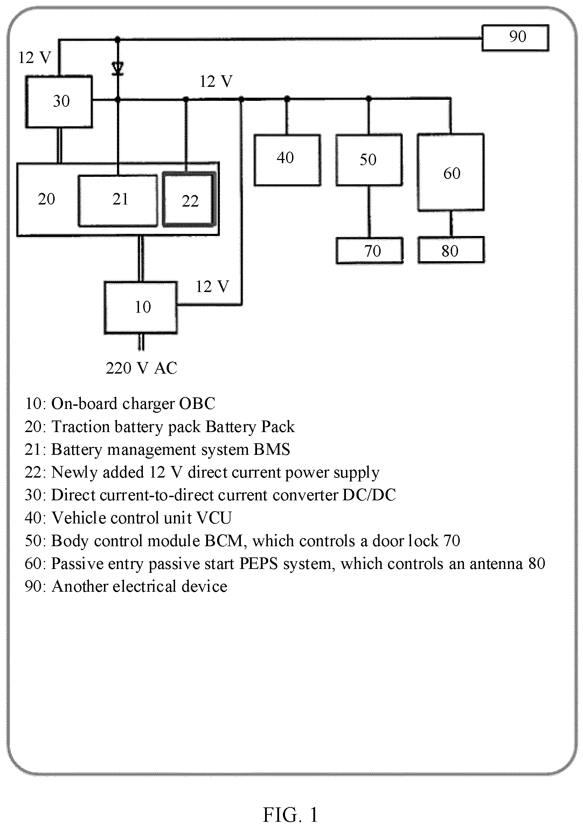

FIG. 1 is a schematic diagram of an electric vehicle power supply system according to Solution 1. As shown in FIG. 1, in Solution 1, a low-power 12 V direct current power supply 22 is added to the traction battery pack 20 to supply power to a controller requiring a low-voltage constant current. One power supply is split from the output terminal of the direct current chopper DC/DC in the vehicle and is then connected in parallel to an output terminal of the 12 V direct current power supply 22 via a diode, and the direct current chopper DC/DC supplies power to a control circuit while in operation. An output terminal of a 12 V auxiliary power supply of an on-board charger is connected in parallel to the output terminal of the 12 V direct current power supply 22.

In Solution 1, an additional control circuit is required in the traction battery pack 20 and may convert a high-voltage current of a traction battery into a 12 V low-voltage direct current. Reliability of the control circuit for voltage conversion in the traction battery pack 20 cannot be ensured, and a battery management system is required to detect a built-in low-voltage load. There is no backup power supply when the direct current chopper DC/DC is not operating and an alternating current charging gun is not plugged in.

Solution 2 provides a new energy vehicle power supply system omitting a low-voltage battery. The system arranges a low-voltage tap in a high-voltage battery pack, and a low-voltage power supply is provided for a controller and another low-voltage load through the low-voltage tap.

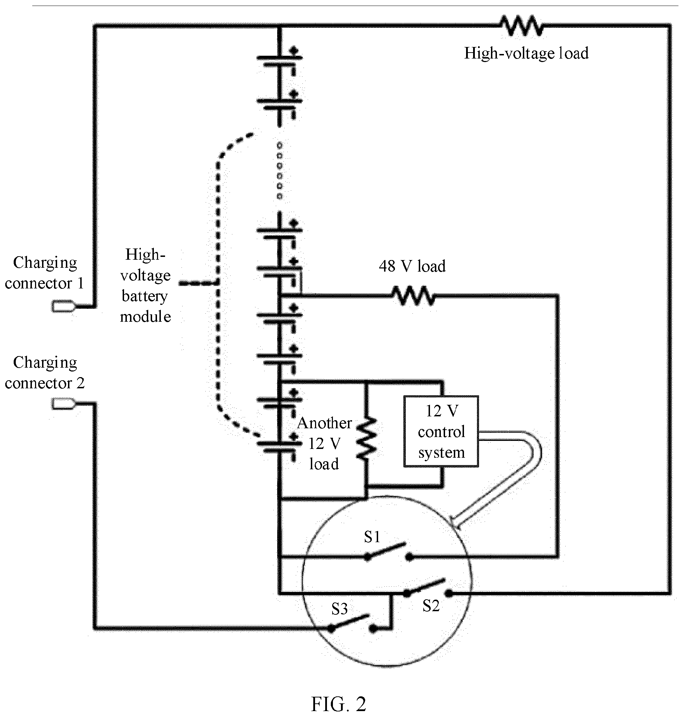

FIG. 2 is a schematic diagram of a new energy vehicle power supply system omitting a low-voltage battery according to Solution 2. As shown in FIG. 2, the 12 V low-voltage tap is arranged in the high-voltage battery module. The 12 V low-voltage tap is led out from some batteries in the high-voltage battery module, replacing a conventional low-voltage battery with the some batteries in the high-voltage battery module, thereby saving space occupied by the original low-voltage battery. A 48 V low-voltage tap may also be arranged in the high-voltage battery module to directly supply power to a 48 V load.

Solution 2 cannot implement an active balancing function. The batteries providing the 12 V low-voltage tap are a part of the high-voltage battery module, and an excessively large difference between states of charge of this part of batteries and those of other batteries in the module severely limits an external power output capability of the high-voltage battery module. Solution 2 cannot implement redundant low-voltage power supply and cannot ensure power supply reliability. The high-voltage power supply system cannot be isolated from the low-voltage power supply system, causing safety hazards.

Embodiments of this application propose a low-voltage redundant power supply system, a basic principle of which is to reuse a battery/a battery module in a high-voltage battery pack in a time-division manner to supply power to a low-voltage load through the control of a relay array in combination. The system includes the relay array composed of a plurality of relays. When a high-voltage load is powered off, a battery in the high-voltage battery pack may be reused in a time-division manner to supply power to the low-voltage load through the control of the relays in combination. Compared with Solutions 1 and 2, the low-voltage redundant power supply system proposed in embodiments of this application does not require an additional low-power 12 V direct current power supply, thereby omitting the arrangement of a low-voltage battery in a conventional low-voltage power supply solution; and can provide a plurality of low-voltage power supply modes, such as independent single-battery power supply, parallel dual-battery power supply, and series dual-battery power supply, which can implement redundant low-voltage power supply that is isolated from a power supply system for the high-voltage load, making the power supply system for the low-voltage load more reliable.

The low-voltage redundant power supply system provided in embodiments of this application is described below in detail.

An embodiment of this application provides a low-voltage redundant power supply system, the system including: a high-voltage battery pack and a relay array. The high-voltage battery pack provides a first voltage and includes a number of power supply units sequentially connected in series, each of the power supply units being at least one battery in the high-voltage battery pack or an equivalent power supply formed by connecting a number of batteries in series/parallel. Relays in the relay array are connected to the power supply units in the high-voltage battery pack based on a specified connection relationship. In at least one on/off state combination of the relay array, at least one power supply unit in the high-voltage battery pack is reused in a time-division manner to provide a second voltage to supply power to a low-voltage load. The first voltage is higher than the second voltage.

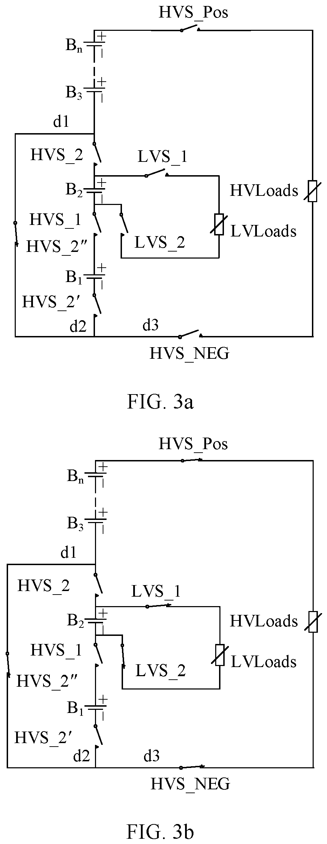

FIG. 3a is a principle diagram in which one power supply unit supplies power to a low-voltage load in a low-voltage redundant power supply system according to an embodiment of this application.

As shown in FIG. 3a, a high-voltage battery pack includes a battery B₁, a battery B₂, a battery B₃, ..., and a battery Bₙ that are sequentially connected in series. A relay array includes a relay HVS_1, a relay HVS_2, a relay HVS_Pos, a relay HVS_NEG, a relay LVS_1, and a relay LVS_2.

The batteries and the relay array may be connected according to the following connection relationship: The relay HVS_1 is arranged between the battery B₁ and the battery B₂, and the battery B₁ is isolated from the battery B₂ when the relay HVS_1 in an off state; the relay HVS_2 is arranged between the battery B₂ and the battery B₃, and the battery B₂ is isolated from the battery B₃ when the relay HVS_2 is in an off state; a first pole of the battery B₂ is connected to a first terminal of the low-voltage load via the relay LVS_1; and a second pole of the battery B₂ is connected to a second terminal of the low-voltage load via the relay LVS_2.

The relay HVS_2 is a linkage relay and further includes a first linkage unit HVS_2' and a second linkage unit HVS_2". A branch d1 split from a negative pole of the battery B₃ is connected to an input terminal of the second linkage unit HVS_2", an output terminal of the second linkage unit HVS_2" is connected to an output terminal of the first linkage unit HVS_2' via a branch d2, and an input terminal of the first linkage unit HVS_2' is connected to a negative pole of the battery B₁. The output terminal of the second linkage unit is connected to an input terminal of the relay HVS_NEG via a branch d3.

A state of the first linkage unit HVS_2' is the same as that of the relay HVS_2, and a state of the second linkage unit HVS_2" is opposite to that of the relay HVS_2. When the state of the relay HVS_2 is off, the state of the first linkage unit HVS_2' is off, and the state of the second linkage unit HVS_2" is on. When the state of the relay HVS_2 is on, the state of the first linkage unit HVS_2' is on, and the state of the second linkage unit HVS_2" is off.

FIG. 3b is a schematic diagram of an on/off state combination of a relay array when one power supply unit supplies power to a low-voltage load while a high-voltage battery pack supplies power to a high-voltage load in the low-voltage redundant power supply system shown based on FIG. 3a.

As shown in FIG. 3b, when the relay LVS_1, the relay LVS_2, the relay HVS_Pos, and the relay HVS_NEG are all in an on state, and the relay HVS_1 and the relay HVS_2 are both in an off state, a sub-battery pack composed of some batteries in the high-voltage battery pack provides the first voltage to deliver electrical energy to the high-voltage load; and the battery B₂ is isolated from the high-voltage battery pack and provides the second voltage to supply power to the low-voltage load.

In an on/off state combination of the relay array, according to the low-voltage redundant power supply system provided in this embodiment of this application, one battery in the high-voltage battery pack may be used as a power supply unit to provide the second voltage in a high-voltage power-off state, providing redundant power supply for the low-voltage load.

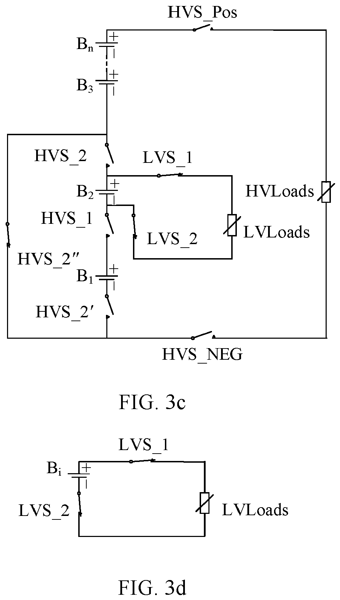

FIG. 3c is a schematic diagram of an on/off state combination of a relay array when one power supply unit supplies power to a low-voltage load in the low-voltage redundant power supply system shown based on FIG. 3a.

As shown in FIG. 3c, when the relay HVS_1 and the relay HVS_2 are both in an off state, and the relay LVS_1 and the relay LVS_2 are both in an on state, the battery B₂ is used as a power supply unit to independently provide the second voltage to supply power to the low-voltage load.

In the low-voltage redundant power supply system shown in FIG. 3c, the battery B₂ is isolated from the high-voltage battery pack and separately supplies power to the low-voltage load LVLoads as a power supply unit, and electrical energy for the low-voltage load LVLoads is completely supplied by the battery B₂. Such a power supply manner can isolate a redundant battery from the high-voltage battery pack to supply power to the low-voltage load LVLoads, and can also prevent an exception of the power supply system for the high-voltage load caused by an exception of the battery B₂.

FIG. 3d is an equivalent circuit diagram in which a battery B₂ shown in FIG. 3c separately supplies power to a low-voltage load as a power supply unit. As shown in FIG. 3d, the relay LVS_1 is arranged between a first pole of any power supply unit Bᵢ in the high-voltage battery pack and the first terminal of the low-voltage load; and the relay LVS_2 is arranged between a second pole of the power supply unit Bᵢ and the second terminal of the low-voltage load. When the relay LVS_1 and the relay LVS_2 are both in an on state, the power supply unit Bᵢ provides the second voltage to supply power to the low-voltage load. When the relay LVS_1 and the relay LVS_2 are both in an off state, the power supply unit Bᵢ stops supplying power to the low-voltage load. The power supply unit Bᵢ may be one battery in the high-voltage battery pack, or may be an equivalent power supply formed by connecting a plurality of batteries in series/parallel.

It may be understood that this embodiment of this application includes various implementations in which one battery in the high-voltage battery pack or an equivalent power supply formed by connecting a plurality of batteries in series/parallel provides redundant power supply for the low-voltage load as a power supply unit in different on/off state combinations of the relay array.

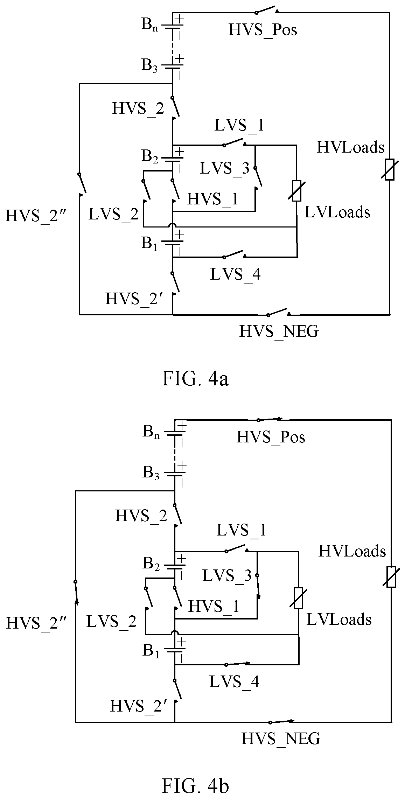

For example, FIG. 4a is a principle diagram in which two power supply units separately supply power to a low-voltage load in a low-voltage redundant power supply system according to an embodiment of this application.

As shown in FIG. 4a, a relay LVS_3 and a relay LVS_4 are added to the relay array based on FIG. 3a. The relay LVS_3 is arranged between a first pole of the battery B₁ and the first terminal of the low-voltage load; and the relay LVS_4 is arranged between a second pole of the battery B₁ and the second terminal of the low-voltage load.

FIG. 4b is a schematic diagram of an on/off state combination of a relay array when a high-voltage battery pack supplies power to a high-voltage load and two power supply units may separately supply power to a low-voltage load in the low-voltage redundant power supply system shown based on FIG. 4a.

As shown in FIG. 4b, when the relay LVS_3, the relay LVS_4, the relay HVS_Pos, and the relay HVS_NEG are all in an on state, and the relay HVS_1, the relay HVS_2, the relay LVS_1, and the relay LVS_2 are all in an off state, a sub-battery pack composed of some batteries in the high-voltage battery pack provides the first voltage to deliver electrical energy to the high-voltage load; and the battery B₁ is isolated from the high-voltage battery pack and provides the second voltage to supply power to the low-voltage load.

In the figure, when the relay LVS_3 and the relay LVS_4 are in an off state, and the relay LVS_1 and the relay LVS_2 are in an on state, this case is equivalent to FIG. 3b, and details are not described herein again.

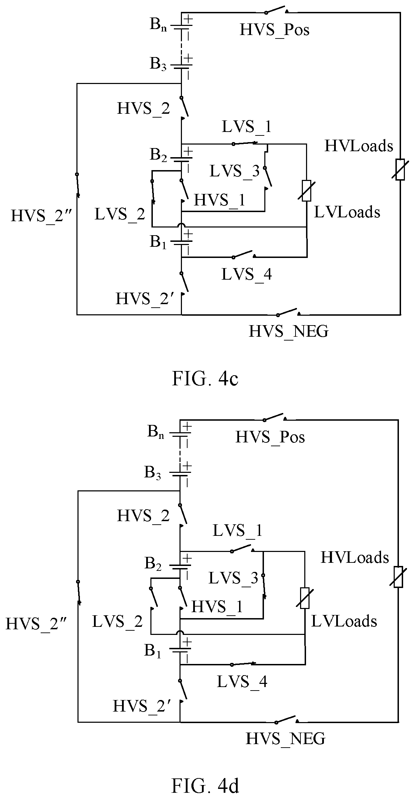

FIG. 4c is a schematic diagram of an on/off state combination of a relay array when in a high-voltage power-off state, a battery B₂ is reused in a time-division manner to supply power to a low-voltage load in the low-voltage redundant power supply system shown based on FIG. 4a.

As shown in FIG. 4c, when the relay HVS_1, the relay HVS_2, the relay LVS_3, and the relay LVS_4 are all in an off state, and the relay LVS_1 and the relay LVS_2 are both in an on state, the battery B₂ in the high-voltage battery pack provides the second voltage to supply power to the low-voltage load.

FIG. 4d is a schematic diagram of an on/off state combination of a relay array when in a high-voltage power-off state, a battery B₁ is reused in a time-division manner to supply power to a low-voltage load in the low-voltage redundant power supply system shown based on FIG. 4a.

As shown in FIG. 4d, when the relay HVS_1, the relay HVS_2, the relay LVS_1, and the relay LVS_2 are all in an off state, and the relay LVS_3 and the relay LVS_4 are both in an on state, the battery B₁ in the high-voltage battery pack provides the second voltage to supply power to the low-voltage load.

Equivalent circuit diagrams of the low-voltage power supply system provided in FIG. 4c in which the battery B₂ separately supplies power in the high-voltage power-off state, the low-voltage power supply system provided in FIG. 4d in which the battery B₁ separately supplies power in the high-voltage power-off state, and the low-voltage power supply system shown in FIG. 3c in which the battery B₂ separately supplies power are all FIG. 3d. The three solutions are equivalent and all fall within the protection scope of embodiments of this application.

It may be understood that any single battery in the high-voltage battery pack or any equivalent power supply formed by a plurality of batteries supplying power to the low-voltage load as a power supply unit in different on/off state combinations of different relay arrays falls within the protection scope of embodiments of this application.

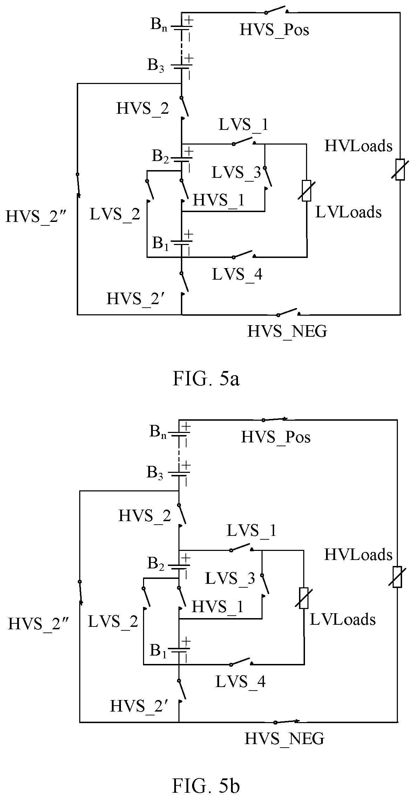

FIG. 5a is a principle diagram in which two power supply units supply power to a low-voltage load in combination in a low-voltage redundant power supply system according to an embodiment of this application. As shown in FIG. 5a, a difference from FIG. 4a to FIG. 4d lies in that, the relay LVS_4 is connected in series between the relay LVS_2 and the second terminal of the low-voltage load, and a common node between the relay LVS_2 and the relay LVS_4 is connected to the second pole of the battery B₁.

FIG. 5b is a schematic diagram of an on/off state combination of a relay array when a high-voltage battery pack supplies power to a high-voltage load in the low-voltage redundant power supply system shown based on FIG. 5a. As shown in FIG. 5b, when the relay HVS_Pos and the relay HVS_NEG are on, and the relay HVS_1, the relay HVS_2, the relay LVS_1, the relay LVS_2, the relay LVS_3, and the relay LVS_4 are all in an off state, a sub-battery pack composed of some batteries in the high-voltage battery pack provides the first voltage to deliver electrical energy to the high-voltage load; and the batteries B₁ and B₂ are isolated from the high-voltage battery pack and may provide the second voltage to supply power to the low-voltage load, either separately or in combination.

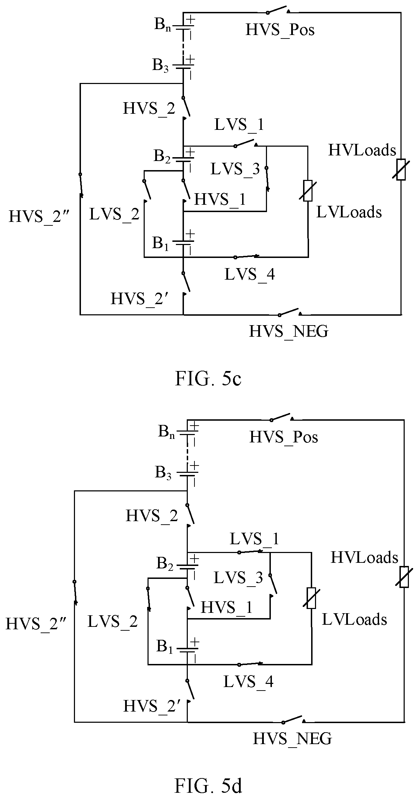

FIG. 5c is a schematic diagram of an on/off state combination of a relay array when a battery B₁ is reused in a time-division manner to supply power to a low-voltage load in the low-voltage redundant power supply system shown based on FIG. 5a. As shown in FIG. 5c, when the relay HVS_1, the relay HVS_2, the relay LVS_1, and the relay LVS_2 are all in an off state, and the relay LVS_3 and the relay LVS_4 are both in an on state, the battery B₁ in the high-voltage battery pack provides the second voltage as a first power supply unit to supply power to the low-voltage load. The first power supply unit may be one battery or an equivalent power supply formed by connecting a plurality of batteries in series/parallel.

FIG. 5d is a schematic diagram of an on/off state combination of a relay array when a battery B₂ is reused in a time-division manner to supply power to a low-voltage load in the low-voltage redundant power supply system shown based on FIG. 5a. As shown in FIG. 5d, when the relay HVS_1, the relay HVS_2, and the relay LVS_3 are all in an off state, and the relay LVS_1, the relay LVS_2, and the relay LVS_4 are all in an on state, the battery B₂ in the high-voltage battery pack provides the second voltage as a second power supply unit to supply power to the low-voltage load. The second power supply unit may be one battery or an equivalent power supply formed by connecting a plurality of batteries in series/parallel.

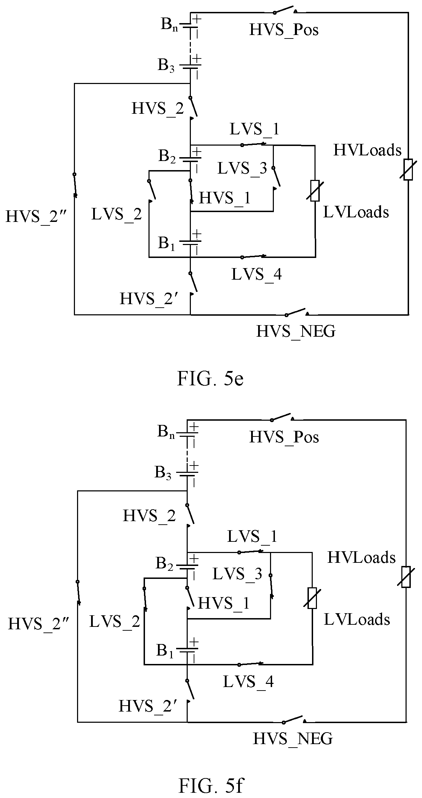

FIG. 5e is a schematic diagram of an on/off state combination of a relay array when a battery B₁ and a battery B₂ are reused in a time-division manner to be connected in series to supply power to a low-voltage load in the low-voltage redundant power supply system shown based on FIG. 5a. As shown in FIG. 5e, when the relay HVS_2, the relay LVS_2, and the relay LVS_3 are in an off state, and the relay HVS_1, the relay LVS_1, and the relay LVS_4 are all in an on state, the battery B₁ and the battery B₂ in the high-voltage battery pack are connected in series respectively as a first power supply unit and a second power supply unit to provide the second voltage to supply power to the low-voltage load LVLoads.

FIG. 5f is a schematic diagram of an on/off state combination of a relay array when a battery B₁ and a battery B₂ are reused in a time-division manner to be connected in parallel to supply power to a low-voltage load in the low-voltage redundant power supply system shown based on FIG. 5a. As shown in FIG. 5f, when the relay HVS_1 and the relay HVS_2 are in an off state, and the relay LVS_1, the relay LVS_2, the relay LVS_3, and the relay LVS_4 are all in an on state, the battery B₁ and the battery B₂ in the high-voltage battery pack are connected in parallel respectively as a first power supply unit and a second power supply unit to provide the second voltage to supply power to the low-voltage load LVLoads.

In the power supply mode shown in FIG. 5f, the battery B₁ and the battery B₂ are connected in parallel and are isolated from the high-voltage power supply system, and electrical energy for the low-voltage load LVLoads is completely supplied by the battery B₁ and the battery B₂. The battery B₁ and the battery B₂ are connected in parallel to supply power to the outside, such that a relatively high supply current can be provided for the low-voltage load LVLoads, and a state-of-charge imbalance caused when the battery B₁ and the battery B₂ supply power to the outside for a long time can also be alleviated.

In the states shown in FIG. 5c to FIG. 5f, the linkage relay HVS_2 is in an off state, and on/off states of the relay HVS_Pos and the relay HVS_NEG have no impact on power supply for the low-voltage load, which may not be discussed herein.

Batteries that supply power to the low-voltage load may have a state-of-charge (SoC) imbalance after supplying power to the low-voltage load for a long time, and there is a difference between electrical energy output from the imbalanced batteries and other batteries in the high-voltage battery pack, causing power derating of a high-voltage power system.

In view of the above problem, an embodiment of this application provides a low-voltage redundant power supply system. In this system, a direct current chopper DC/DC is arranged, and a number of relays such as a relay HVS_3 are correspondingly added. In an on/off state combination of the relay array, the direct current chopper DC/DC is used to supply power to the low-voltage load, to avoid power derating of a high-voltage power system caused by a state-of-charge (SoC) imbalance of batteries that supplies power to the low-voltage load for a long time.

A principle of using the direct current chopper DC/DC to supply power to the low-voltage load is to use the direct current chopper DC/DC to convert a high voltage provided by some sub-battery modules in the high-voltage battery pack into a low voltage, so as to supply power to the low-voltage load. An output side of the direct current chopper DC/DC is connected to the low-voltage load, to supply power to the low-voltage load. A sub-battery module composed of some batteries in the high-voltage battery pack is used as a third power supply unit. The third power supply unit includes a sub-battery module other than the first power supply unit and/or the second power supply unit.

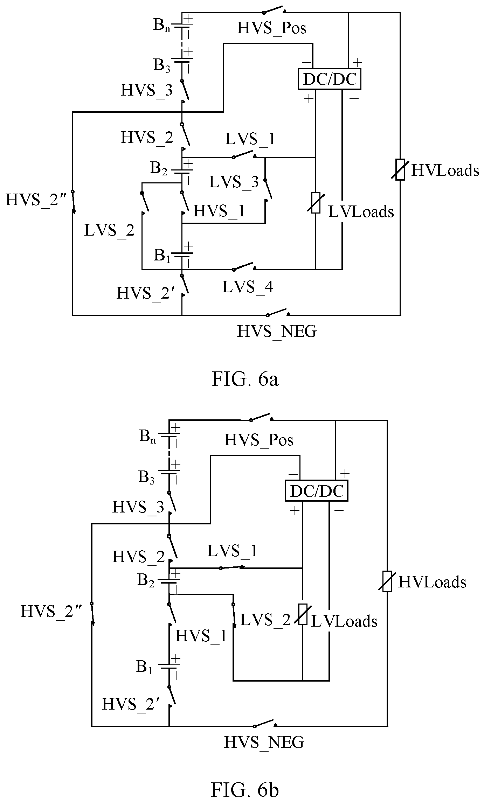

FIG. 6a is a principle diagram in which a direct current chopper DC/DC is used to supply power to a low-voltage load in a low-voltage redundant power supply system according to an embodiment of this application.

FIG. 6a is based on the principle diagram of single-battery low-voltage power supply shown in FIG. 3a. A direct current chopper DC/DC is arranged, and a relay HVS_3 is correspondingly arranged. The relay HVS_3 isolates a third power supply unit in the high-voltage battery pack that supplies power to the direct current chopper DC/DC from the first power supply unit and/or the second power supply unit supplying power to the low-voltage load.

In the embodiment shown in FIG. 6a, the relay HVS_Pos is arranged between a first pole on an input side of the direct current chopper DC/DC and a first pole of the battery Bₙ; the relay HVS_3 is arranged between a second pole on the input side of the direct current chopper DC/DC and a second pole of the battery B₃; when the relay HVS_Pos and the relay HVS_3 are in an off state, an input power supply for the direct current chopper DC/DC is isolated; and when the relay HVS_Pos and the relay HVS_3 are in an on state, the third power supply unit supplies power to the direct current chopper DC/DC. The third power supply unit is a battery module composed of the battery B₃ to the battery Bₙ.

The linkage relay HVS_2 is arranged between the relay HVS_3 and the battery B₂; and the linkage relay HVS_2 is always in an off state while in operation, isolating the third power supply unit supplying power to the direct current chopper DC/DC from the first power supply unit and/or the second power supply unit supplying power to the low-voltage load. The linkage relay HVS_2 can also isolate an input and an output of the direct current chopper DC/DC. The first power supply unit is the battery B₂, and the second power supply unit is B₁.

An output side of the direct current chopper DC/DC is connected to the low-voltage load LVLoads.

FIG. 6b is a schematic diagram of an on/off state combination of a relay array when a direct current chopper DC/DC is in a non-operating state and a battery B₂ is reused in a time-division manner to supply power to a low-voltage load in the low-voltage redundant power supply system shown based on FIG. 6a. As shown in FIG. 6b, when the relay HVS_1, the relay HVS_2, the relay HVS_3, the relay HVS_Pos, and the relay HVS_NEG are in an off state, and the relay LVS_1 and the relay LVS_2 are in an on state, the direct current chopper DC/DC is in a non-operating state, and the circuit is equivalent to the circuit shown in FIG. 3c, with the battery B₂ used as a power supply unit to supply power to the low-voltage load LVLoads.

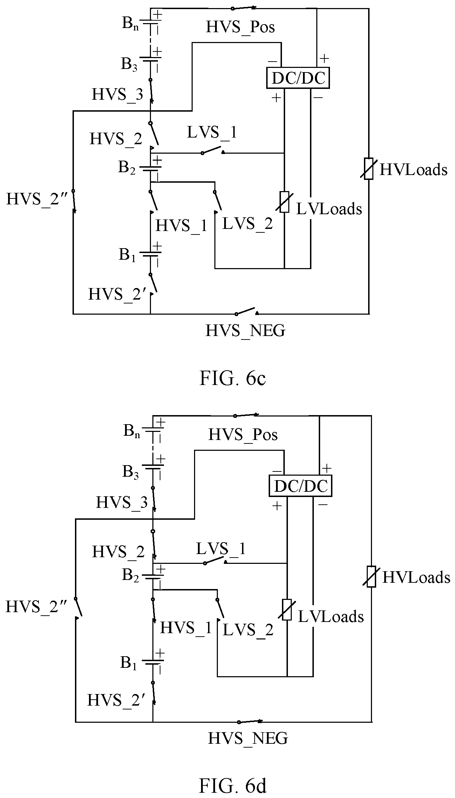

FIG. 6c is a schematic diagram of an on/off state combination of a relay array when a direct current chopper DC/DC supplies power to a low-voltage load LVLoads in the low-voltage redundant power supply system shown based on FIG. 6a. As shown in FIG. 6c, when the relay HVS_Pos and the relay HVS_3 are in an on state, and the relay HVS_1, the relay HVS_2, the relay LVS_1, and the relay LVS_2 are all in an off state, the third power supply unit in the high-voltage battery pack supplies power to the direct current chopper, and the direct current chopper DC/DC provides the second voltage to supply power to the low-voltage load LVLoads. In FIG. 6c, when the relay HVS_NEG is in an off state, HVLoads is in a high-voltage power-off state; and when the relay HVS_NEG is in an on state, the high-voltage battery pack provides the first voltage to supply power to the high-voltage load HVLoads, and the direct current chopper DC/DC provides the second voltage to supply power to the low-voltage load LVLoads.

Any control circuit having all possible relay array connections and on/off state combinations and producing the same effect as the circuit shown in FIG. 6c is an equivalent circuit of FIG. 6c, and any system using the equivalent circuit to make the direct current chopper DC/DC supply power to the low-voltage load LVLoads falls within the protection scope of embodiments of this application.

When the direct current chopper DC/DC supplies power to the low-voltage load, the battery B₁ and the battery B₂ may further be connected in series to the high-voltage battery pack through the control of the relay array in combination, so as to supply power to the high-voltage load HVLoads.

FIG. 6d is a schematic diagram of an on/off state combination of a relay array when a high-voltage battery pack supplies power to a direct current chopper DC/DC in the low-voltage redundant power supply system shown based on FIG. 6a. As shown in FIG. 6d, when the relay HVS_1, the relay HVS_2, the relay HVS_3, the relay HVS_Pos, and the relay HVS_NEG are all in an on state, and the relay LVS_1 and the relay LVS_2 are both in an off state, the battery B₁ and the battery B₂ are connected in series to the high-voltage battery pack, and may deliver electrical energy to the high-voltage load together with the high-voltage battery pack.

In this state, the direct current chopper DC/DC may convert a high voltage provided by some sub-battery modules in the high-voltage battery pack into a low voltage to supply power to the low-voltage load LVLoads, and the battery B₁ and the battery B₂ are connected in series to the high-voltage battery pack and can supply power to the high-voltage load HVLoads, providing high-voltage electrical energy for the vehicle to travel. This embodiment can avoid power derating of a high-voltage power system due to a battery imbalance.

If batteries that supply power to the low-voltage load have a state-of-charge (SoC) imbalance, the direct current chopper DC/DC may be used to perform balancing for the battery B₁, the battery B₂, or another battery that supplies power to the low-voltage load.

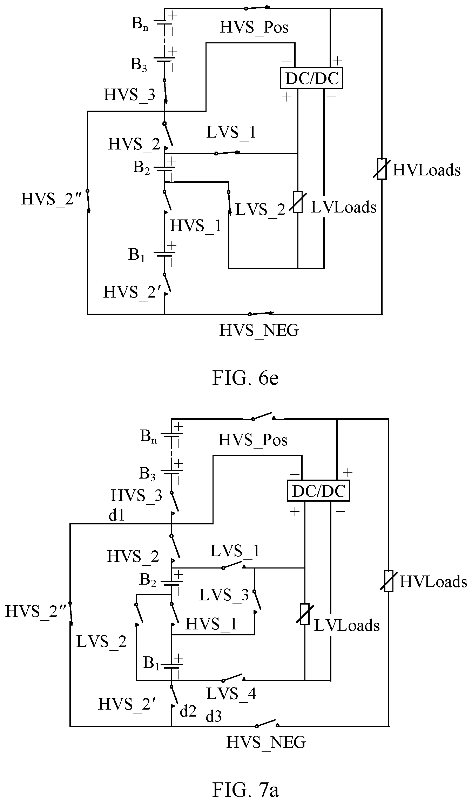

FIG. 6e is a schematic diagram of an on/off state combination of a relay array when a direct current chopper DC/DC performs balancing for a battery B₂ in the low-voltage redundant power supply system shown based on FIG. 6a. As shown in FIG. 6e, when the relay HVS_3, the relay HVS_Pos, the relay LVS_1, and the relay LVS_2 are all in an on state, and the relay HVS_1 and the relay HVS_2 are both in an off state, the direct current chopper DC/DC performs balancing for the battery B₂. The battery B₂ is a power supply unit in the high-voltage battery pack. In this case, the relay HVS_NEG may be in an off state or in an on state, which has no impact on the direct current chopper DC/DC.

Any control circuit having all possible relay array connections and on/off state combinations and producing the same effect as the circuit shown in FIG. 6e is an equivalent circuit of FIG. 6e, and any method using the equivalent circuit to make the direct current chopper DC/DC supply power to a power supply unit in the high-voltage battery pack falls within the protection scope of embodiments of this application.

Performing balancing for the power supply unit in the high-voltage battery pack using the direct current chopper DC/DC can avoid a decline in a capability of power supply to the low-voltage load due to insufficient battery power, and can also avoid power derating of a high-voltage power system due to an SoC imbalance of the battery B₁, the battery B₂, or another battery that supplies power to the low-voltage load.

The direct current chopper DC/DC may further perform active balancing for two batteries that supply power to the low-voltage load. Active balancing performed for the battery B₁ and the battery B₂ includes a battery B₁ active balancing mode, a battery B₂ active balancing mode, a low-voltage power supply mode with the battery B₂ and the battery B₁ connected in parallel, or the like. The various balancing modes mentioned above are discussed in detail below.

FIG. 7a is a schematic principle diagram of a circuit in which a direct current chopper DC/DC performs balancing for two batteries that supply power to a low-voltage load in a low-voltage redundant power supply system according to an embodiment of this application. As shown in FIG. 7a, a relay LVS_3 and a relay LVS_4 are added to the relay array based on FIG. 6a.

Specifically, the relay LVS_3 is arranged between the first pole of the battery B₁ and the first terminal of the low-voltage load, the relay LVS_4 is connected in series between the relay LVS_2 and the second terminal of the low-voltage load, and a common node between the relay LVS_2 and the relay LVS_4 is connected to the second pole of a battery B1.

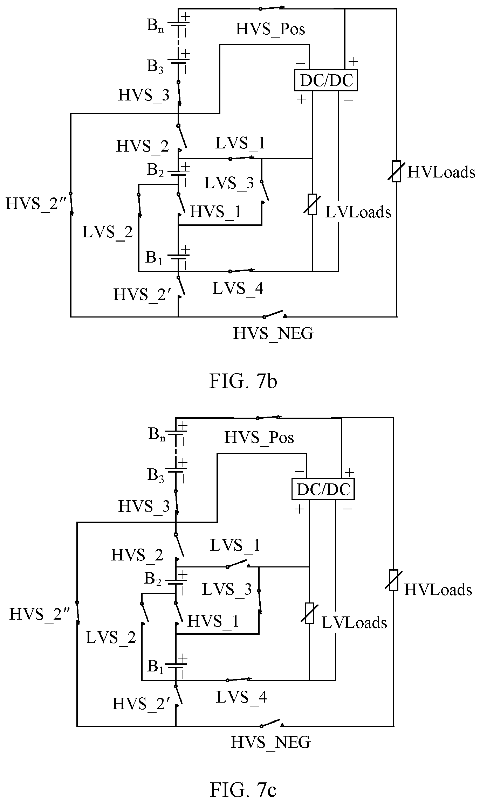

FIG. 7b is a schematic diagram of an on/off state combination of a relay array when a direct current chopper DC/DC supplies power and performs active balancing for a battery B₂ in the low-voltage redundant power supply system shown based on FIG. 7a. As shown in FIG. 7b, the relay LVS_1, the relay LVS_2, the relay LVS_4, the relay HVS_3, and the relay HVS_Pos are in an on state, and the relay LVS_3, the relay HVS_1, and the relay HVS_2 are in an off state; the third power supply unit supplies power to the direct current chopper DC/DC; and the direct current chopper DC/DC supplies power to the low-voltage load and simultaneously performs active balancing for the battery B₂. It should be noted that in this case, the relay HVS_Neg in the figure may be in an off state or in an on state. Refer to Table 1 for on/off states of the relays.

FIG. 7c is a schematic diagram of an on/off state combination of a relay array when a direct current chopper DC/DC supplies power and performs active balancing for a battery B₁ in the low-voltage redundant power supply system shown based on FIG. 7a. As shown in FIG. 7c, the relay LVS_3, the relay LVS_4, the relay HVS_3, and the relay HVS_Pos are in an on state, and the relay LVS_1, the relay LVS_2, the relay HVS_1, and the relay HVS_2 are in an off state; the third power supply unit supplies power to the direct current chopper DC/DC; and the direct current chopper DC/DC supplies power to the low-voltage load and simultaneously performs active balancing for the battery B₁. In this case, the relay HVS_Neg in the figure may be in an off state or in an on state. Refer to Table 1 for on/off states of the relays.

In the power supply modes of the two on/off state combinations of the relay array in FIG. 7b and FIG. 7c, the linkage relay HVS_2 is off, such that the battery B₁ and the battery B₂ are isolated from the high-voltage load. After the high-voltage load is powered on, the direct current chopper DC/DC is in a powered-on state, and electrical energy for the low-voltage load LVLoads is supplied by the direct current chopper DC/DC. The direct current chopper DC/DC performs balancing for the battery B₁ or the battery B₂ while supplying electrical energy to the low-voltage load LVLoads. Performing active balancing for the battery B₁ or the battery B₂ can eliminate an SoC imbalance caused when the battery B₁ or the battery B₂ supplies power to the outside for a long time.

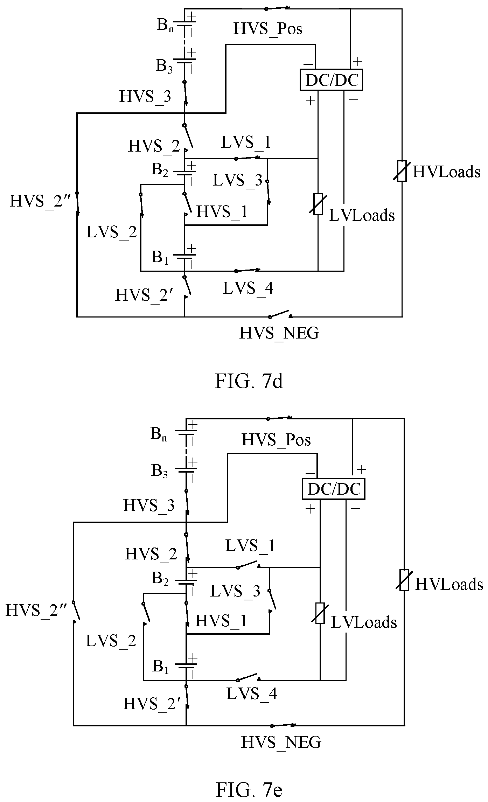

FIG. 7d is a schematic diagram of an on/off state combination of a relay array when a direct current chopper DC/DC supplies power and performs balancing for a battery B₁ and a battery B₂ connected in parallel in the low-voltage redundant power supply system shown based on FIG. 7a. As shown in FIG. 7d, the relay LVS_1, the relay LVS_2, the relay LVS_3, the relay LVS_4, the relay HVS_3, and the relay HVS_Pos are in an on state, and the relay HVS_1 and the relay HVS_2 are in an off state; the third power supply unit supplies power to the direct current chopper DC/DC; and the direct current chopper DC/DC supplies power to the low-voltage load and simultaneously performs balancing for the battery B₁ and the battery B₂ connected in parallel. In this case, the relay HVS_Neg in the figure may be in an off state or in an on state. Refer to Table 1 for on/off states of the relays.

In this power supply mode, the battery B₁ and the battery B₂ are connected in parallel and are isolated from the high-voltage load, and the direct current chopper DC/DC performs balancing for the battery B₁ or the battery B₂ connected in parallel while supplying power to the low-voltage load LVLoads, so that an SoC imbalance caused when the battery B₁ and the battery B₂ supply power to the outside for a long time can be eliminated.

FIG. 7e is a schematic diagram of an on/off state combination of a relay array when a direct current chopper DC/DC supplies power without balancing in the low-voltage redundant power supply system shown based on FIG. 7a.

As shown in FIG. 7e, the relay LVS_1, the relay LVS_2, the relay LVS_3, and the relay LVS_4 are in an off state, and the relay HVS_1, the relay HVS_2, the relay HVS_3, the relay HVS_Neg, and the relay HVS_Pos are in an on state; the battery B₁ and the battery B₂ are connected in series to the high-voltage battery pack; the high-voltage battery pack provides the first voltage to supply power to the high-voltage load HVLoads, and simultaneously provides a high-voltage power supply for the direct current chopper DC/DC; and the direct current chopper DC/DC outputs the second voltage to supply power to the low-voltage load LVLoads. Refer to Table 1 for on/off states of the relays.

In this power supply mode, as a part of the high-voltage traction battery pack, the battery B₁ and the battery B₂ are connected in series to other batteries in the high-voltage traction battery pack, and are isolated from the low-voltage load. The high-voltage traction battery pack including the battery B₁ and the battery B₂ can provide a high-voltage power supply for the direct current chopper DC/DC. After being powered on, the direct current chopper DC/DC can supply power to the low-voltage load LVLoads.

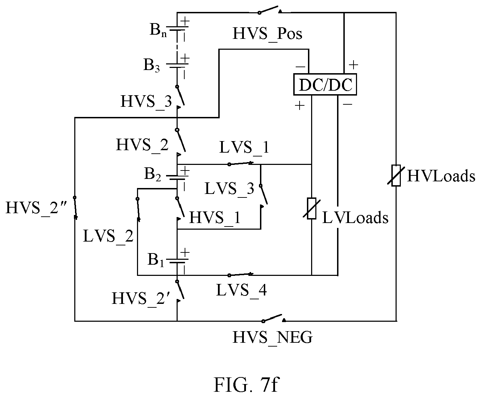

FIG. 7f is a schematic diagram of an on/off state combination of a relay array when a direct current chopper DC/DC is in a non-operating state and a power supply unit in a high-voltage traction battery pack that is reused in a time-division manner supplies power to a low-voltage load in the low-voltage redundant power supply system shown based on FIG. 7a.

As shown in FIG. 7f, when the relay HVS_2, the relay HVS_3, and the relay HVS_Pos are in an off state, the high-voltage traction battery pack stops supplying power to the high-voltage load, and the direct current chopper DC/DC is in a non-operating state. In this case, an on/off state combination of the relay array may be set, and the power supply unit in the high-voltage traction battery pack that is reused in a time-division manner supplies power to the low-voltage load. With reference to FIG. 5c to FIG. 5f, on/off states of the relay LVS_1, the relay LVS_2, the relay LVS_3, the relay LVS_4, and the relay HVS_1 are set in combination, so that the battery B₁ alone supplies power to the low-voltage load, the battery B₂ alone supplies power to the low-voltage load, the battery B₁ and the battery B₂ are connected in series to supply power to the low-voltage load, and the battery B₁ and the battery B₂ are connected in parallel to supply power to the low-voltage load. Details are not described herein again. Refer to Table 1 for on/off states of the relays.

**Table 1**

| Power supply mode | LVS_1 | LVS_2 | LVS_3 | LVS_4 | HVS_1 | HVS_2 | HVS_3 | HVS_Neg | HVS_Pos |
|---|---|---|---|---|---|---|---|---|---|
| Battery B₁ and battery B₂ connected in parallel | 1 | 1 | 1 | 1 | 0 | 0 | 0 | 0 | 0 |
| Battery B₁ and battery B₂ connected in series | 1 | 0 | 0 | 1 | 1 | 0 | 0 | 0 | 0 |
| Battery B₂ alone | 1 | 1 | 0 | 1 | 0 | 0 | 0 | 0 | 0 |
| Battery B₁ alone | 0 | 0 | 1 | 1 | 0 | 0 | 0 | 0 | 0 |
| DC/DC performs no balancing | 0 | 0 | 0 | 0 | 1 | 1 | 1 | 1 | 1 |
| DC/DC performs active balancing for battery B₂ | 1 | 1 | 0 | 1 | 0 | 0 | 1 | 0/1 | 1 |
| DC/DC performs active balancing for battery B₁ | 0 | 0 | 1 | 1 | 0 | 0 | 1 | 0/1 | 1 |
| DC/DC performs active balancing for battery B₁/battery B2 | 1 | 1 | 1 | 1 | 0 | 0 | 1 | 0/1 | 1 |

The low-voltage redundant power supply system proposed in embodiments of this application controls the relays in combination, and reuses a battery in the high-voltage battery pack in a time-division manner to supply power to the low-voltage redundant power supply system, which not only omits the arrangement of an independent battery in a conventional power supply solution, but also can provide more low-voltage power supply modes, such as independent single-battery power supply, parallel dual-battery power supply, and series dual-battery power supply. In addition, the high-voltage power supply system is isolated from the low-voltage power supply system, thereby eliminating safety hazards and making the low-voltage power supply system more reliable.

According to the low-voltage redundant power supply system proposed in embodiments of this application, after being powered on, the direct current chopper DC/DC may perform, based on a state of charge of a battery, single-battery active balancing, dual-battery active balancing, or the like for batteries for supplying power to the low-voltage load, to avoid an excessively large difference between states of charge of this part of batteries and those of other batteries caused when this part of batteries supply power to the low-voltage load for a long time.

According to the low-voltage redundant power supply system proposed in embodiments of this application, after being powered on, the direct current chopper DC/DC may "return", as required, a battery for supplying power to the low-voltage load to the high-voltage battery pack, to fully utilize a high-voltage power supply capability of the battery pack.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A low-voltage redundant power supply system, wherein the system comprises:
a high-voltage battery pack, configured to provide a first voltage and comprising a number of power supply units sequentially connected in series, each of the power supply units being at least one battery in the high-voltage battery pack or an equivalent power supply formed by connecting a number of batteries in series/parallel; and
a relay array, with relays in the relay array connected to the power supply units in the high-voltage battery pack based on a specified connection relationship, wherein
in at least one on/off state combination of the relay array, at least one power supply unit in the high-voltage battery pack is reused in a time-division manner to provide a second voltage to supply power to a low-voltage load; and the first voltage is higher than the second voltage.

2. The low-voltage redundant power supply system according to claim 1, wherein the number of power supply units comprise a first power supply unit and at least one second power supply unit, and in an on/off state combination of the relay array, the first power supply unit or the second power supply unit provides the second voltage to supply power to the low-voltage load.

3. The low-voltage redundant power supply system according to claim 1, wherein the number of power supply units comprise a first power supply unit and a second power supply unit, and in an on/off state combination of the relay array, the first power supply unit and at least one second power supply unit are connected in series to provide the second voltage to supply power to the low-voltage load.

4. The low-voltage redundant power supply system according to claim 1, wherein the number of power supply units comprise a first power supply unit and a second power supply unit, and in an on/off state combination of the relay array, the first power supply unit and the second power supply unit are connected in parallel to provide the second voltage to supply power to the low-voltage load.

5. The low-voltage redundant power supply system according to claim 1, wherein the system further comprises a direct current chopper, and the number of power supply units comprise a first power supply unit and a third power supply unit; the first power supply unit supplies power to the low-voltage load; and in an on/off state combination of the relay array, the first power supply unit interrupts power supply to the low-voltage load, the third power supply unit supplies power to the direct current chopper, and the direct current chopper provides the second voltage to supply power to the low-voltage load.

6. The low-voltage redundant power supply system according to claim 1, wherein the system further comprises a direct current chopper, and the number of power supply units comprise a first power supply unit and a third power supply unit; the first power supply unit supplies power to the low-voltage load; and in an on/off state combination of the relay array, the third power supply unit supplies power to the direct current chopper, and the direct current chopper provides the second voltage to perform balancing for the first power supply unit and to supply power to the low-voltage load.

7. The low-voltage redundant power supply system according to claim 2, wherein the system further comprises a direct current chopper, and the number of power supply units further comprise a third power supply unit; and in an on/off state combination of the relay array, the third power supply unit supplies power to the direct current chopper, and the direct current chopper provides the second voltage to perform balancing for the first power supply unit or the second power supply unit and to supply power to the low-voltage load.

8. The low-voltage redundant power supply system according to claim 4, wherein the system further comprises a direct current chopper, and the number of power supply units further comprise a third power supply unit; and in an on/off state combination of the relay array, the third power supply unit supplies power to the direct current chopper, and the direct current chopper provides the second voltage to perform balancing for the first power supply unit and the second power supply unit and to supply power to the low-voltage load.

9. The low-voltage redundant power supply system according to claim 1, wherein the number of power supply units comprise a first power supply unit, a second power supply unit, and a third power supply unit; the relay array comprises a first relay (HVS_1), a second relay (HVS_2), a third relay (LVS_1), and a fourth relay (LVS_2); and
the specified connection relationship comprises: the first relay (HVS_1) is connected between the first power supply unit and the second power supply unit;
the second relay (HVS_2) is connected between the second power supply unit and the third power supply unit; a first pole of the second power supply unit is connected to a first terminal of the low-voltage load via the third relay (LVS_1); and
a second pole of the second power supply unit is connected to a second terminal of the low-voltage load via the fourth relay (LVS_2).

10. The low-voltage redundant power supply system according to claim 1 or 2, wherein the number of power supply units comprise a first power supply unit, a second power supply unit, and a third power supply unit; the relay array comprises a first relay (HVS_1), a second relay (HVS_2), a third relay (LVS_1), a fourth relay (LVS_2), a fifth relay (LVS_3), and a sixth relay (LVS_4); and
the specified connection relationship comprises: the first relay (HVS_1) is connected between the first power supply unit and the second power supply unit;
the second relay (HVS_2) is connected between the second power supply unit and the third power supply unit; a first pole of the second power supply unit is connected to a first terminal of the low-voltage load via the third relay (LVS_1);
a second pole of the second power supply unit is connected to a second terminal of the low-voltage load via the fourth relay (LVS_2);
a first pole of the first power supply unit is connected to the first terminal of the low-voltage load via the fifth relay (LVS_3); and
a second pole of the first power supply unit is connected to the second terminal of the low-voltage load via the sixth relay (LVS_4).

11. The low-voltage redundant power supply system according to any one of claims 1 to 4, wherein the number of power supply units comprise a first power supply unit, a second power supply unit, and a third power supply unit; the relay array comprises a first relay (HVS_1), a second relay (HVS_2), a third relay (LVS_1), a fourth relay (LVS_2), a fifth relay (LVS_3), and a sixth relay (LVS_4); and
the specified connection relationship comprises: the first relay (HVS_1) is connected between the first power supply unit and the second power supply unit;
the second relay (HVS_2) is connected between the second power supply unit and the third power supply unit;
a first pole of the second power supply unit is connected to a first terminal of the low-voltage load via the third relay (LVS_1);
a second pole of the second power supply unit is connected to a second pole of the first power supply unit via the fourth relay (LVS_2);
a first pole of the first power supply unit is connected to the first terminal of the low-voltage load via the fifth relay (LVS_3); and
a second pole of the first power supply unit is connected to the second terminal of the low-voltage load via the sixth relay (LVS_4).

12. The low-voltage redundant power supply system according to any one of claims 9 to 11, wherein the system further comprises a direct current chopper; the relay array further comprises a seventh relay (HVS_3) and an eighth relay (HVS_Pos); and
the specified connection relationship further comprises:
the eighth relay (HVS_Pos) is connected between a first pole of the third power supply unit and a first pole on an input side of the direct current chopper;
the seventh relay (HVS_3) is connected between a second pole of the third power supply unit and a second pole on the input side of the direct current chopper;
the second relay (HVS_2) is connected between the second pole on the input side of the direct current chopper and the first pole of the second power supply unit;
the seventh relay (HVS_3) is connected to the second relay (HVS_2) in series and is then connected to the first pole of the second power supply unit; and
the low-voltage load is connected between a first pole and a second pole on an output side of the direct current chopper.

13. The low-voltage redundant power supply system according to any one of claims 9 to 12, wherein the second relay (HVS_2) is a linkage relay, and comprises a first linkage unit (HVS_2') and a second linkage unit (HVS_2"); and the second relay (HVS_2) is connected to the second pole of the first power supply unit via the second linkage unit (HVS_2") and the first linkage unit (HVS_2').
